# DEMANDE DE BREVET EUROPEEN

(11) **EP 1 701 045 A1**
(43) Date de publication de la demande: **13.09.2006**
(21) Numéro de dépôt: 06003129.1
(22) Date de dépôt: 16.02.2006
(51) Int. Cl.: F16B 9/02, F16B 2/24, F16B 21/18

(54) **Dispositif d'assemblage d'un élément de connexion sur un support fixe**

(30) Priorité: 08.03.2005 FR 0502311
(71) Demandeur: A. Raymond et Cie, 38000 Grenoble (FR)
(72) Inventeur: Tresorier, Jean-François, 38130 Echirolles (FR)
(74) Mandataire: Rüttgers, Joachim

(57) **Abrégé**

Le dispositif d'assemblage (10), d'un élément de connexion sur un support fixe, comprend une pièce métallique (11) de liaison, destinée à maintenir l'élément de connexion sur le support fixe après assemblage. La pièce métallique (11) est conformée en bague de clipage et comporte deux branches latérales (18a, 18b) courbes déformables, reliées par une base plane (17) commune et ayant des extrémités supérieures libres (19a, 19b) parallèles. La bague de clipage comporte un premier système de verrouillage (20), associé à la base plane (17) et destiné à coopérer avec un orifice réalisé dans le support fixe, et un second système de verrouillage (22a, 22b), associé aux extrémités libres (19a, 19b) des branches latérales (18a, 18b) et destiné à coopérer avec une fente, réalisée dans le support fixe.

## Description

### Domaine technique de l'invention

L'invention concerne un dispositif d'assemblage, d'un élément de connexion sur un support fixe, comprenant une pièce métallique de liaison, destinée à maintenir l'élément de connexion sur le support fixe après assemblage.

### État de la technique

Il existe de nombreux types de dispositifs d'assemblage permettant de fixer un élément de connexion, par exemple un raccord de câbles, sur un support fixe, par exemple solidaire d'un châssis, notamment dans le domaine de l'industrie automobile.

Un premier exemple de dispositif d'assemblage utilise une fourchette en acier, introduite avec force dans une collerette de l'élément de connexion, lui-même introduit dans un orifice de forme complémentaire du support fixe. La fourchette est généralement montée par l'intermédiaire d'un marteau, pour fixer solidement l'élément de connexion dans le support fixe. Cependant, un tel dispositif impose l'utilisation d'un outil et nécessite un espace de travail important, pour insérer la fourchette et effectuer l'assemblage.

Un autre exemple de dispositif d'assemblage connu est constitué par une entretoise élastique, maintenant l'élément de connexion sur le support fixe et pouvant s'écraser, lors du raccordement d'un autre élément sur l'élément de connexion. Cependant, un tel dispositif d'assemblage s'avère complexe et nécessite également l'utilisation d'un outil.

### Objet de l'invention

L'invention a pour but de remédier aux inconvénients précités et a pour objet la réalisation d'un dispositif d'assemblage simple, présentant une bonne tenue mécanique et permettant de monter et démonter facilement et rapidement un élément de connexion sur un support fixe.

L'objet de l'invention est caractérisé en ce que la pièce métallique est conformée en bague de clipage comportant :
- deux branches latérales courbes déformables, reliées par une base plane commune et ayant des extrémités supérieures libres parallèles,
- un premier système de verrouillage, associé à la base plane et destiné à coopérer avec un orifice, réalisé dans le support fixe,
- et un second système de verrouillage, associé aux extrémités libres des branches latérales et destiné à coopérer avec une fente, réalisée dans le support fixe.

Selon un développement de l'invention, le premier système de verrouillage comporte une lamelle recourbée à 180°, faisant saillie de la base plane et jouant le rôle de crochet de blocage.

Selon un autre développement de l'invention, le second système de verrouillage comporte une paire de languettes de blocage, solidaires de la partie postérieure des pattes de clipage et destinées à bloquer les pattes de clipage de part et d'autre de la fente, dans une position finale d'insertion.

Un tel dispositif d'assemblage avec deux systèmes de verrouillage permet de bloquer efficacement l'élément de connexion sur le support fixe.

Selon un mode de réalisation préférentiel, les extrémités libres des branches latérales sont munies d'une paire de pattes de clipage, destinées à être introduites dans la fente du support fixe, et d'une paire de pattes de déclipage, destinées à désengager les languettes de blocage de la fente, lors du désassemblage de l'élément de connexion du support fixe.

Le système de clipage et déclipage rapide, équipant le dispositif d'assemblage, permet de monter et démonter sans effort l'élément de connexion sur le support fixe.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
Les figures 1 et 2 sont des vues en perspective, respectivement de face et de derrière, d'un mode de réalisation particulier d'un dispositif d'assemblage selon l'invention.
La figure 3 représente un élément de connexion en attente d'être assemblé sur un support fixe, par l'intermédiaire du dispositif d'assemblage selon les figures 1 et 2.
La figure 4 représente le dispositif d'assemblage, monté sur l'élément de connexion, selon la figure 3.
La figure 5 représente l'élément de connexion équipé du dispositif d'assemblage, selon la figure 4, assemblé sur le support fixe.

### Description du mode particulier de réalisation

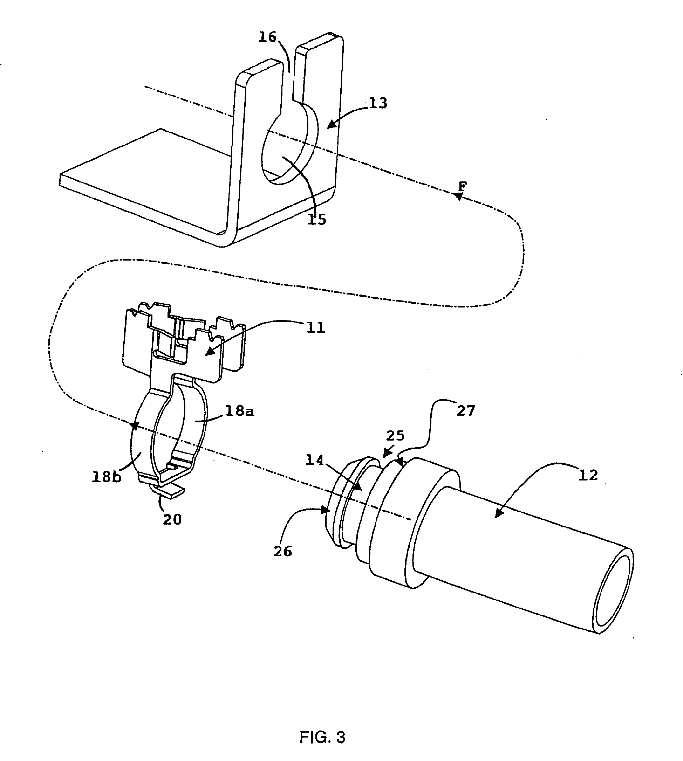

En référence aux figures, un dispositif d'assemblage 10 comporte une pièce métallique 11, conformée sensiblement en anneau ouvert pour épouser la forme, de préférence sensiblement circulaire, d'un élément de connexion 12, destiné à être fixé sur un support fixe 13 (figures 3 à 5).

L'élément de connexion 12 est, par exemple, un raccord cylindrique permettant de relier deux éléments tubulaires d'amenage de fluide et comporte une gorge 14 formant un logement pour la pièce métallique 11 (figures 3 à 5). La largeur de la gorge 14 est légèrement supérieure à la largeur de la pièce métallique 11, de sorte que ladite pièce métallique 11 soit montée glissante sur l'élément de connexion 12.

Le support fixe 13 est conformé, par exemple, en équerre avec une première face plane, par exemple solidaire d'un châssis, et une seconde face, perpendiculaire à la première, destinée à recevoir l'élément de connexion 12 (figure 3). Cette face de réception du support fixe 13 comporte, de préférence, un orifice circulaire 15 et une fente 16, destinés à coopérer avec la pièce métallique 11, lors de l'assemblage de l'élément de connexion 12 sur le support fixe 13.

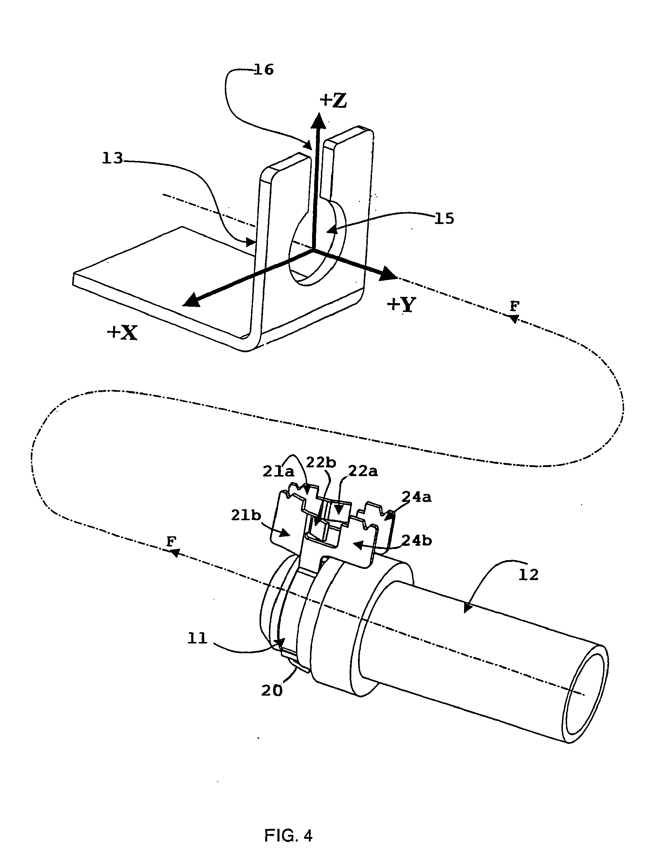

En se référant au plan de référence X, Y, Z, représenté sur la figure 4, la face de réception du support fixe 13 s'étend dans le plan XZ, l'élément de connexion 12 s'insérant dans l'orifice 15 du support fixe 13, selon l'axe Y.

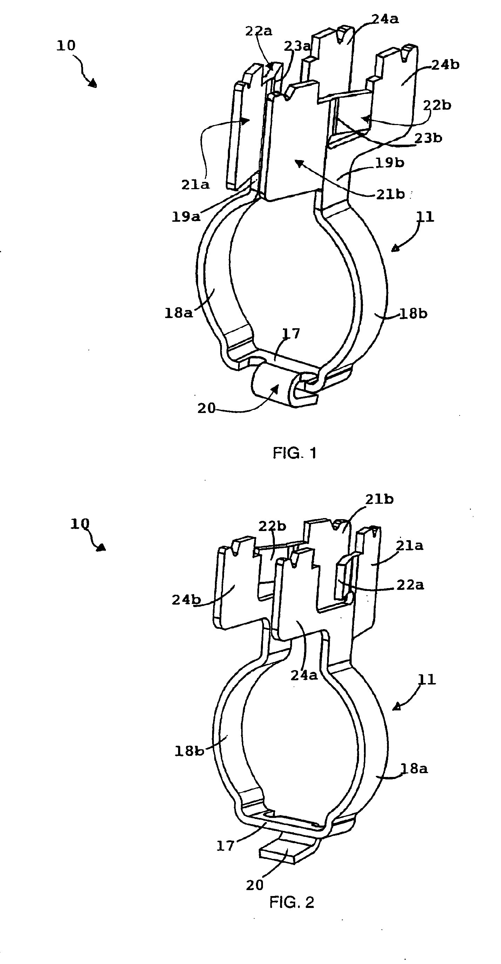

Sur les figures 1 et 2, la pièce métallique 11 est obtenue par découpage d'une tôle ou d'un feuillard métallique ayant une épaisseur prédéterminée. La tôle est pliée et cambrée autour de plusieurs lignes de pliage pour réaliser la pièce 11 monobloc du dispositif d'assemblage 10.

La pièce 11 pliée constitue une bague de clipage comportant une base plane 17, reliée à deux branches latérales courbes 18a, 18b déformables, présentant chacune une extrémité supérieure libre 19a, 19b. Les extrémités libres 19a, 19b sont parallèles entre elles, perpendiculaires à la base plane 17 et sont susceptibles de s'écarter et se rapprocher l'une de l'autre, selon la déformation des branches latérales 18a, 18b.

La base 17 est pourvue d'une lamelle 20 faisant saillie de la base 17 et étant recourbée à 180° sous celle-ci, de manière à former un crochet de blocage. La lamelle 20 constitue le premier système de verrouillage de la bague de clipage sur le support fixe 13 (figures 3 à 5).

La pièce métallique 11 comporte également une première paire de pattes de clipage 21a, 21b déformables, destinées à s'insérer à travers la fente 16 du support fixe 13. Les pattes de clipage 21a, 21b font saillie des extrémités libres 19a, 19b, dans une direction opposée à l'orientation du crochet de blocage.

Les pattes de clipage 21a, 21b sont orientées l'une vers l'autre (figure 1), pour former des pattes d'actionnement en V, provoquant le rapprochement des branches latérales 18a, 18b, lors du passage des pattes de clipage 21a, 21b dans la fente 16 du support fixe 13. L'orientation en V des pattes de clipage 21a, 21b facilite notamment l'insertion de la bague dans la fente 16.

Chaque patte de clipage 21a, 21b est dotée d'une languette de blocage 22a, 22b, réalisée sur sa partie postérieure et destinée également à s'insérer dans la fente 16 du support fixe 13, après insertion de la patte de clipage 21a, 21b correspondante. Les languettes de blocage 22a, 22b sont destinées à bloquer les pattes de clipage 21a, 21b de part et d'autre de la fente 16, dans une position finale d'insertion. Les languettes de blocage 22a, 22b constituent le second système de verrouillage de la bague de clipage sur le support fixe 13.

Les languettes de blocage 22a, 22b sont disposées dans le prolongement du V, formé par les pattes de clipage 21a, 21b, de sorte que l'intervalle délimité par la partie arrière des languettes de blocage 22a, 22b soit plus large que l'intervalle délimité par la partie avant des pattes de clipage 21a, 21b.

Les parties basses des pattes de clipage 21a, 21b sont solidaires des extrémités libres 19a, 19b, tandis que les languettes de blocage 22a, 22b font saillie des parties hautes des pattes de clipage 21a, 21b. Les languettes de blocage 22a, 22b sont ainsi disposées en regard des extrémités libres 19a, 19b (figures 1 et 2).

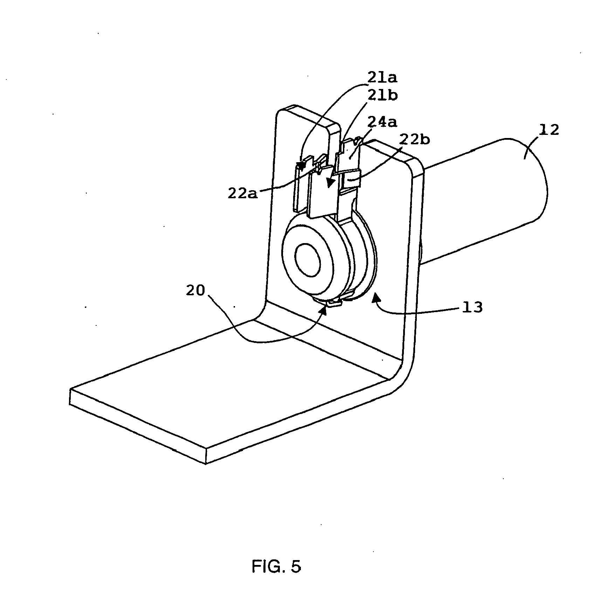

Par ailleurs, les languettes de blocage 22a, 22b comportent des zones de flexion 23a, 23b constituant les jointures entre les pattes de clipage 21a, 21b et les languettes de blocage 22a, 22b correspondantes. Dans une position finale d'insertion, représentée sur la figure 5, les languettes de blocage 22a, 22b viennent se caler de part et d'autre de la fente 16 du support fixe 13. En cas de retour de l'élément de connexion 12, selon l'axe Y (figure 4), les zones de flexion 23a, 23b se courbent et les languettes de blocage 22a, 22b empêchent le désassemblage de l'élément de connexion 12.

Le dispositif d'assemblage 10 comporte ainsi deux systèmes de verrouillage, à savoir le crochet de blocage et les languettes de blocage 22a, 22b, orientés dans le sens opposé au sens d'introduction de l'élément de connexion 12 dans le support fixe 13. La tenue mécanique de l'élément de connexion 12 sur le support fixe 13 est donc optimale.

La pièce métallique 11 comporte également et avantageusement une paire de pattes de déclipage 24a, 24b (figure 2) déformables, servant à désassembler rapidement l'élément de connexion 12 du support fixe 13. Les pattes de déclipage 24a, 24b font saillie des extrémités libres 19a, 19b des branches latérales 18a, 18b en opposition par rapport aux pattes de clipage 21a, 21b.

Les pattes de clipage 21a, 21b et de déclipage 24a, 24b, associées à chaque branche latérale 18a, 18b, sont ainsi disposées de part et d'autre de l'extrémité libre 19a, 19b correspondante.

Une simple pression avec les doigts suffit à rapprocher les pattes de déclipage 24a, 24b l'une vers l'autre. Il en résulte le rapprochement des branches latérales 18a, 18b et le désengagement des pattes de clipage 21a, 21b de la fente 16 du support fixe 13.

L'assemblage de l'élément de connexion 12 sur le support fixe 13, par l'intermédiaire de la bague de clipage, va être décrit plus en détail au regard des figures 3 à 5.

L'orifice 15 du support fixe 13 présente une forme circulaire, complémentaire de la forme d'un embout 25 libre de l'élément de connexion 12, lequel est destiné à être introduit dans le support fixe 13. La fente 16 coopérant avec le second système de verrouillage de la bague de clipage s'étend selon l'axe Z de la figure 4 et débouche à la fois dans l'orifice 15 et sur la partie supérieure du support fixe 13.

Sur la figure 3, la gorge 14 est réalisée au niveau de l'embout libre 25 de l'élément de connexion 12. La largeur de la gorge 14 est supérieure à la largeur des branches latérales 18a, 18b de la bague. Le diamètre défini par les branches latérales 18a, 18b est supérieur au diamètre de la gorge 14. Il en résulte un glissement relatif de la bague à l'intérieur de la gorge 14. La gorge 14 est donc montée glissante autour de l'élément de connexion 12, autorisant la rotation de l'élément de connexion 12 à l'intérieur de l'orifice 15 du support fixe 13, une fois l'assemblage effectué.

L'embout 25 comporte, de préférence, un chanfrein 26 facilitant l'introduction des branches latérales 18a, 18b dans la gorge 14. Le chanfrein 26 permet de limiter les efforts transversaux d'écartement des branches 18a, 18b. Il en résulte un montage sans effort de la bague de clipage sur l'élément de connexion 12.

L'élément de connexion 12 est pourvu avantageusement d'un épaulement 27, ayant un diamètre supérieur au diamètre de l'orifice 15 du support fixe 13. L'épaulement 27 vient en butée contre la face du support fixe 13, lors de l'assemblage de l'élément de connexion 12 dans l'orifice 15. L'épaulement 27 détermine l'insertion maximale de l'élément de connexion 12 à l'intérieur de l'orifice 15 du support fixe 13.

Sur la figure 4, la bague de clipage est pré-montée dans la gorge 14 de l'élément de connexion 12. L'élément de connexion 13 est ensuite positionné en regard de l'orifice 15 et de la fente 16 du support fixe 13, selon les flèches F (figures 3 à 5). L'embout 25 de l'élément de connexion est positionné en regard de l'orifice 15 et les pattes de clipage 21a, 21b sont positionnées en regard de la fente 16.

La lamelle 20, conformée en crochet de blocage, est d'abord insérée à travers l'orifice 15 et vient s'appuyer sur la face arrière du support fixe 13, pour servir de point d'appui à l'élément de connexion 12. Par un mouvement de basculement, selon l'axe X de la figure 4, les pattes d'encliquetage 21 a, 21 b se positionnent naturellement dans la fente 16, grâce à leur orientation en V, et sont introduites à travers la fente 16, jusqu'à ce que les languettes de blocage 22a, 22b sortent de la fente 16 (figure 5).

Pendant l'insertion de la bague dans la fente 16, les pattes de clipage 21a, 21b se rapprochent l'une de l'autre, grâce à la déformation des branches latérales 18a, 18b autour de la gorge 14, le diamètre défini par les branches 18a et 18b étant supérieur au diamètre de la gorge 14.

Sur la figure 5, correspondant à la position finale d'insertion, les languettes de blocage 22a, 22b et la lamelle 20 sont en appui derrière la face du support fixe 13 et bloquent l'élément de connexion 12 dans le support fixe 13. Les deux systèmes de verrouillage sont actifs et assurent un assemblage solide de l'élément de connexion 12 dans le support fixe 13.

Dans cette position finale d'insertion, les pattes de déclipage 24a, 24b sont en appui contre les parois de la fente 16. La bague de clipage est donc bloquée en rotation, tandis que la rotation de l'élément de connexion 12 reste libre. Il est alors possible d'effectuer le branchement entre l'élément de connexion 12 et un autre élément à connecter (non représenté).

Pour décliper la pièce métallique 11 et désassembler l'élément de connexion 12 du support fixe 13, une pression simultanée sur les deux pattes de déclipage 24a, 24b suffit. Le rapprochement des pattes de déclipage 24a, 24b selon l'axe X (figure 4) provoque le rapprochement des languettes de blocage 22a, 22b et le resserrement des branches latérales 18a, 18b, jusqu'à ce que l'intervalle entre les deux languettes de blocage 22a, 22b soit inférieur à la largeur de la fente 16.

Les languettes de blocage 22a, 22b et les pattes de clipage 21a, 21b passent alors à travers la fente 16 et par un mouvement de basculement, opposé au mouvement de basculement effectué pour l'assemblage, les pattes de clipage 21a, 21b se désengagent complètement de la fente 16. Enfin, la lamelle 20 est décrochée de l'orifice 15 du support fixe 13, en déplaçant l'élément de connexion 12 vers le haut.

Un tel dispositif d'assemblage 10 comprenant une pièce métallique 11, munie de deux systèmes de verrouillage et d'un système de clipage et déclipage rapide, permet, d'une part, d'obtenir un assemblage de bonne tenue mécanique et, d'autre part, de monter et démonter simplement et rapidement tout type d'élément de connexion 12 sur un support fixe 13 complémentaire.

Le pré-montage de la bague sur l'élément de connexion 12 se fait de manière aisée, il n'y a pas de risque de perte de la bague, pendant la phase de désassemblage, grâce à la conception particulière de l'élément de connexion 12, avec une gorge 14 de logement pour la bague.

Par ailleurs, il n'est pas nécessaire d'utiliser des outils pour assembler la bague sur l'élément de connexion 12 et pour assembler l'élément de connexion 12 sur le support fixe 13. L'assemblage peut être effectué en aveugle et nécessite peu de place.

L'invention n'est pas limitée au mode de réalisation décrit ci-dessus. La forme des pattes de clipage 21 a, 21 b et de déclipage 24a, 24b, ainsi que la forme du crochet de blocage et des languettes de blocage 22a, 22b, peuvent être différentes, tant que le dispositif d'assemblage 10 comporte deux systèmes de verrouillage permettant de fixer solidement l'élément de connexion 12 sur le support fixe 13.

## Revendications

1. Dispositif d'assemblage (10), d'un élément de connexion (12) sur un support fixe (13), comprenant une pièce métallique (11) de liaison, destinée à maintenir l'élément de connexion (12) sur le support fixe (13) après assemblage, dispositif
**caractérisé en ce que** la pièce métallique (11) est conformée en bague de clipage comportant :
- deux branches latérales courbes (18a, 18b) déformables, reliées par une base plane (17) commune et ayant des extrémités supérieures libres (19a, 19b) parallèles,
- un premier système de verrouillage, associé à la base plane (17) et destiné à coopérer avec un orifice (15), réalisé dans le support fixe (13),
- et un second système de verrouillage, associé aux extrémités libres (19a, 19b) des branches latérales (18a, 18b) et destiné à coopérer avec une fente (16), réalisée dans le support fixe (13).

2. Dispositif d'assemblage selon la revendication 1, **caractérisé en ce que** le premier système de verrouillage comporte une lamelle (20) recourbée à 180°, faisant saillie de la base plane (17) et jouant le rôle de crochet de blocage.

3. Dispositif d'assemblage selon l'une des revendications 1 et 2, **caractérisé en ce que** les extrémités libres (19a, 19b) des branches latérales (18a, 18b) sont munies d'une paire de pattes de clipage (21a, 21b), destinées à être introduites dans la fente (16) du support fixe (13).

4. Dispositif d'assemblage selon la revendication 3, **caractérisé en ce que** les pattes de clipage (21a, 221b) sont orientées l'une vers l'autre, pour former des pattes d'actionnement en V, provoquant le rapprochement des branches latérales (18a, 18b) de la bague, lors de l'insertion des pattes de clipage (21 a, 21 b) dans la fente (16).

5. Dispositif d'assemblage selon l'une des revendications 3 et 4, **caractérisé en ce que** le second système de verrouillage comporte une paire de languettes de blocage (22a, 22b), solidaires de la partie postérieure des pattes de clipage (21a, 21b) et destinées à bloquer les pattes de clipage (21a, 21b) de part et d'autre de la fente (16), dans une position finale d'insertion.

6. Dispositif d'assemblage selon l'une quelconque des revendications 3 à 5,
**caractérisé en ce que** les extrémités libres (19a, 19b) des branches latérales (18a, 18b) sont munies d'une paire de pattes de déclipage (24a, 24b), destinées à désengager les languettes de blocage (22a, 22b) de la fente (16), lors du désassemblage de l'élément de connexion (12) sur le support fixe (13).

7. Dispositif d'assemblage selon l'une quelconque des revendications 1 à 6,
**caractérisé en ce que** la pièce métallique (11) est montée glissante dans une gorge (14), réalisée au niveau d'un embout libre (25) de l'élément de connexion (12).

8. Dispositif d'assemblage selon la revendication 7, **caractérisé en ce que** l'embout libre (25) de l'élément de connexion (12) comporte un chanfrein (26).

9. Dispositif d'assemblage selon l'une quelconque des revendications 1 à 8,
**caractérisé en ce que** l'élément de connexion (12) comporte un épaulement (27), jouant le rôle de butée contre le support fixe (13), lors de l'assemblage de l'élément de connexion (12).

10. Dispositif d'assemblage selon l'une quelconque des revendications 1 à 9,
**caractérisé en ce que** la pièce (11) est obtenue par découpage et pliage d'une tôle ou d'un feuillard métallique ayant une épaisseur prédéterminée.
